# EUROPEAN PATENT SPECIFICATION

(11) **EP 2 828 354 B1**
(45) Date of publication and mention of the grant of the patent: **09.08.2017**
(21) Application number: 13765124.6
(22) Date of filing: 21.03.2013
(51) Int. Cl.: C09K 21/12, C07F 9/09, C08K 5/521

(54) **AMINO GROUP-CONTAINING PHOSPHATE ESTER FLAME RETARDANT AND METHOD OF PREPARING THE SAME**
FLAMMSCHUTZMITTEL AUS AMINOGRUPPENHALTIGEM PHOSPHATESTER UND HERSTELLUNGSVERFAHREN DAFÜR
RETARDATEUR DE FLAMME ESTER PHOSPHATE À TENEUR EN GROUPE AMINO ET SON PROCÉDÉ DE PRÉPARATION

(30) Priority: 21.03.2012 KR 20120028556
(43) Date of publication of application: 28.01.2015
(73) Proprietor: LG Hausys, Ltd., Seoul 07326 (KR)
(72) Inventor: YANG, In Suk, Cheongju-si Chungcheongbuk-do 28427 (KR); LEE, Jong Cheol, Cheongju-si Chungcheongbuk-do 28663 (KR)
(74) Representative: Goddar, Heinz J.
(86) International application number: PCT/KR2013/002365
(87) International publication number: WO 2013/141633

(56) References cited:
- JP-A- H11 286 612
- JP-A- 2006 322 102
- JP-A- 2008 303 288
- KR-A- 20090 006 645
- US-A- 4 536 530
- US-A1- 2005 032 751
- US-A1- 2010 298 506
- TOLDY ET AL: "Intrinsically flame retardant epoxy resin - Fire performance and background - Part I", POLYMER DEGRADATION AND STABILITY, BARKING, GB, vol. 92, no. 12, 29 November 2007 (2007-11-29), pages 2223-2230, XP022369976, ISSN: 0141-3910, DOI: 10.1016/J.POLYMDEGRADSTAB.2007.04.017
- T. A Modro ET AL: "Alkylating properties of phosphate esters. 3. Reactivity of dialkyl 2-(dimethylamino) ethyl phosphates", Journal of Physical Organic Chemistry, 1 April 1989 (1989-04-01), pages 263-270, XP55212132, DOI: 10.1002/poc.610020309 Retrieved from the Internet: URL:https://s3.amazonaws.com/objects.readc ube.com/articles/downloaded/wiley/eaca2427 d3abe0699ece00d99ec3c83e94a92b8b41e5a2ccf4 465af022e58afb.pdf?AWSAccessKeyId=AKIAIJZY FKH6APDFT3HA&Expires=1441929600&Signature= Q8PWsEsYRQGuPlW906nuwNKAntw=&response-cont ent-type=application/pdf
- DATABASE CA [Online] CHEMICAL ABSTRACTS SERVICE, COLUMBUS, OHIO, US; 2007, XP002744240, retrieved from STN Database accession no. 148:450934

## Description

### Technical field

The present invention relates to the use of an amino group-containing phosphate ester as a flame retardant and to a flame retardant resin composition comprising the flame retardant to exhibit a good flame retarding effect while overcoming the problems with the conventional phosphor-based flame retardants not having a good flame retarding effect with respect to its used amount.

### Background Art

Conventionally, organic halogen compounds have been added as a flame retardant in order to provide flame retardant properties for a resin composition containing thermosetting resins, such as epoxy resins, unsaturated polyester resins, phenol resins, or melamine resins, and thermoplastic resins, such as ABS resins, AS resins, PET resins, PBT resins, or PMMA resins. Such a resin compositions containing organic halogen compounds has excellent flame retardant properties but problematically generates deadly poisonous dioxins adversely affecting the environments when heated during the molding process or incinerated after use. For that reason, there has been suggested the use of phosphor-based flame retardants as a substitute for the organic halogen compounds.

Generally, the phosphor-based flame retardants contain triphenyl phosphate (TPP) to induce char formation in combination with melamine cyanate used as a nitrogen compound to enhance char formation. In this case, however, triphenyl phosphate (TPP) and melamine cyanate differ in thermal decomposition temperature from each other, so the flame retardants hardly exert a good flame retarding effect with respect to its used amount.

Polymer Degradation and Stability, Vol. 92, No. 12, 2223-2230, Journal of Physical Organic Chemistry, 1989, 263-270, US 20051032751 A1, US 4,536, 530 A and Journal of Elastomers & Plastics (2007), 38(1), 33-51, disclose amino group-containing phosphate ester flame retardants.

### Disclosure of Invention

### Technical Problem

The inventors of the present invention have made an attempt to synthesize a compound having both a phosphate group and an amine group and thus increase the flame retarding effect, with a view of improving the aforementioned problem with the prior art that uses triphenyl phosphate (TPP) as a char-forming phosphor-based flame retardant in combination with melamine cyanate as a nitrogen compound to enhance char formation and thus hardly cannot have a good flame retarding effect with respect to its used amount, since triphenyl phosphate (TPP) and melamine cyanate differ in thermal decomposition temperature from each other. Applying a first flame retardant containing chlorines and then a second flame retardant free from chlorine to an acryl resin enables the preparation of an acryl-based flame retardant that has good flame regarding properties.

It is an object of the present invention to provide amino group-containing phosphate esters for use as a flame retardant. having good flame retardant properties.

This and other objects of the present invention can be achieved by the present invention in the following description.

### Solution to Problem

To achieve the object of the present invention, the present invention provides the use of an amino group-containing phosphate ester comprising both an amino group and a phosphate group, wherein the amino group-containing phosphate ester is selected from the group consisting of tris-(2-diethylamino-ethyl)phosphate, tris-(2-dimethylamino-ethyl)phosphate, tridimethylaminomethyl phosphate, tridiethylaminomethyl phosphate, bis-(2-dimethylamino-ethyl)methyl-phosphate, bis-(2-diethylamino-ethyl)methyl-phosphonate, di-diethylaminomethylmethyl-phosphate, triethylamino phosphate, di-ethylamino methylamino phosphate, dimethylamino ethylamino phosphate, diethylaminomethyl dimethyl phosphate, 2-diethylamino-ethyldimethyl phosphate, and 2-dimethylamino-ethyl-dimethyl phosphate as a flame retardant.

In addition, the present invention further provides a flame retardant resin composition including 5 to 50 wt% of the amino group-containing phosphate ester flame retardant; and 50 to 95 wt% of a resin.

### Advantageous Effects of Invention

The flame retardant, which includes both a phosphate group and an amine group, can be applied to an acryl-based resin to improve the flame retarding effect.

### Mode for the invention

Hereinafter, a detailed description will be given as to the present invention.

The present invention provides the use of an amino group-containing phosphate ester as a flame retardant according to claim 1.

Among the amino group-containing phosphate ester flame retardant, non-halogen flame retardants are selected from the group consisting of tris-(2-diethylamino-ethyl)phosphate, tris-(2-dimethylamino-ethyl)phosphate, tridimethylaminomethyl phosphate, tridiethylaminomethyl phosphate, bis-(2-dimethylamino-ethyl)methyl-phosphate, bis-(2-diethylaminoethyl)methyl-phosphonate, di-diethylaminomethylmethyl-phosphate, triethylamino phosphate, diethylamino methylamino phosphate, dimethylamino ethylamino phosphate, diethylaminomethyl dimethyl phosphate, 2-diethylamino-ethyldimethyl phosphate, and 2-dimethylamino-ethyl-dimethyl phosphate.

More specifically, tris-(2-diethylamino-ethyl)phosphate or tridimethylaminomethyl phosphate can be represented by the following formula 1 or 2.

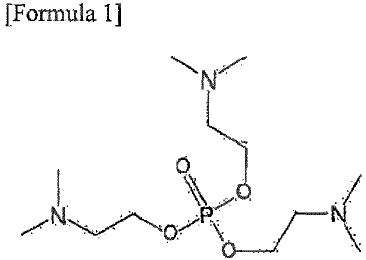

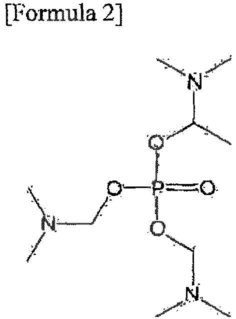

The amino group-containing phosphate ester may be substituted with a halogen, such as fluorine (F), chlorine (Cl), bromine (Br), or iodine (I). More specifically, the chlorine-based amino group-containing phosphate ester may be selected from the group consisting of, if not specifically limited to, tris-[2-(bis-chloromethyl-amino)-ethyl] phosphate, tris-[2-(chloromethylethyl-amino)-ethyl] phosphate, tris-[(bis-chloromethyl-amino)-methyl] phosphate and tris-[(chloromethyl-ethyl-amino)-methyl] phosphate. Disclosed is a method of preparing an amino group-containing phosphate ester flame retardant that includes: (a) reacting trichlorophosphate ester with an alcohol to synthesize trialkyl phosphate ester; and (b) reacting the trialkyl phosphate ester with an amino alcohol or an amino halogen salt to synthesize an amino phosphate ester or a halogenated amino phosphate ester as a final product, where the phosphate ester is selected from the group consisting of phosphate, phosphonate, and phosphinate.

The preparation method for tris-(2-diethylamino-ethyl) phosphate and tridimethylaminomethyl phosphate as represented by the formula 1 or 2 among the amino group-containing phosphate ester flame retardants can be represented by the reaction scheme as follows.

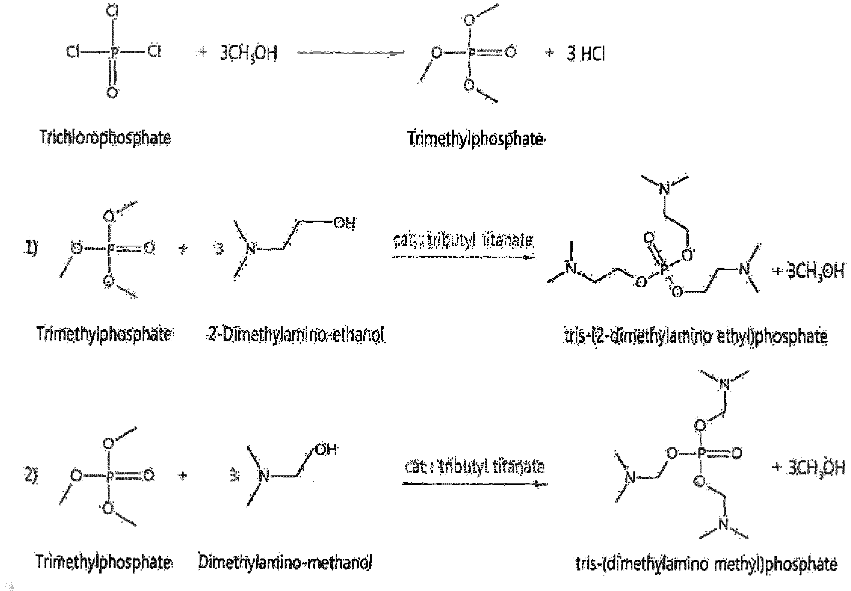

In the preparation method, preferably, the step (a) is carried out in the temperature range from 0 °C to 60 °C for 5 to 15 hours, and the step (b) is carried out in the temperature range from 50 °C to 100 °C for 5 to 15 hours.

The alcohol used in the step (a) may be selected from the group consisting of methanol, ethanol, propanol, and butanol. But, the alcohol may include (1) ethanol type or (2) methanol type in order to control the thermal characteristics and migration characteristics of the product. The amino alcohol used in the step (b) may be selected from the group consisting of 2-dimethyl amino ethanol, dimethyl amino ethanol, 2-dimethyl amino methanol, and 2-dimethyl amino propanol, and may be preferably 2-dimethyl amino ethanol.

Further, the amino halogen salt used in the step (b) may be selected from the group consisting of 2-bis-chloroethyl amine, 2-chloromethylethyl amine, bis-chloroethyl amine, and chloromethylethyl amine, and may be preferably bis-chloroethyl amine.

The present invention also provides a flame retardant resin composition containing 5 to 50 wt% of the amino group-containing phosphate ester flame retardant; and 50 to 95 wt% of a resin.

The above-defined content of the flame retardant can provide a flame retarding effect which meets the UL-94V standards.

The flame retardant can be applied to other resins, such as acryl-based resins, urethane or polycarbonate resins, etc., and mainly applicable to acryl-based resins.

Hereinafter, preferable examples of the present invention will be provided to facilitate the better understanding of the present invention. It would be understood by those skilled in the art that various changes and modifications may be made without changing the scope and the technical conception of the present invention and construed to be included in the accompanying claims of the present invention.

### <Examples>

### Example 1: Preparation of Tris-(Dimethylamino Methyl) phosphate

689.7 g of trichlorophosphate (POCl 3) is added to 1,995 g of toluene at the room temperature, and 640.3 g of ethanol (C 2H 5OH) is then added dropwise for 3 hours to yield 492 g of hydrogen chloride (HCl). The hydrogen chloride thus obtained is aged at the room temperature for 5 hours and subjected to a 5-hour topping with toluene at 140 °C, a 2-hour vacuum topping (1 torr) at 110 °C, and then filtration to yield 819.3 g of the primary reaction product, triethyl phosphate (C 6H 15PO 4).

794.7 g of trimethyl phosphate (C 3H 9PO 4) as produced above is added to 2,168 g of toluene heated up to 110 °C and 10 g of tyzor TBT. The resultant mixture is subjected to a solvent reflux topping while mixed with dimethylamino methanol (C 3H 9NO) which is added dropwise at 130 °C for 3 hours, to obtain 603.0 g of ethanol (C 2H 5OH). The ethanol is aged at 130 °C for 5 hours and subjected to a 5-hour topping with toluene at 150 °C, a 2-hour vacuum topping (1 torr) at 150 °C, and then filtration to yield 1,000 g of the final product, tris-(dimethylamino methyl) phosphate (C 9H 24N 3PO 4).

The quantities (weight and the number of moles) of the reactants and the products, and the yield as given in Example 1 are presented in Table 1.

**[Table 1]**

| | | **Compound** | **Weight (g)** | **Molecular weight** | **Number of moles (mol)** | **Yield (%)** | **Note** |
|---|---|---|---|---|---|---|---|
| **First reaction (ethylation)** | **Reactants** | **POCl₃** | **689.7** | **153.3320** | **4.4979** | - | **-** |
| | | **C₂H₅OH** | **640.3** | **46.0684** | **13.4937** | - | **3% excess** |
| | | **Toluene** | **1994.9** | - | **-** | - | ***(a)** |
| | **Products** | **C₆H₁₅PO₄** | **819.3** | **182.1550** | **4.4979** | **97.00** | |
| | | **HCl** | **492.0** | **36.4609** | **13.4937** | - | **-** |
| **Second redaction (methyl-animation)** | **Reactants** | **C₆H₁₅PO₄** | **794.7** | **182.1550** | **4.3630** | - | **-** |
| | | **C₃H₉NO** | **1012.6** | **75.1097** | **13,0889** | - | **3% excess** |
| | | **Toluene** | **2168.8** | - | **-** | - | ***(b)** |
| | | **Tyzor TBT** | **10.0** | - | **-** | - | ***(c)** |
| | **Products** | **C₉H₂₄N₃PO₄** | **1000.0** | **241.2650** | **4.3630** | **95.00** | **-** |
| | | **C₂H₅OH** | **603.0** | **46.0684** | **13.0889** | - | **-** |

### [Experiment Example]

The sample obtained in Example 1 is measured in regard to properties in the manner as described below. The measurement results are presented in Table 2.
* Candle Test: The flame of a burning candle is placed next to the target portion of a plastic product of which the external plastic has the total weight of 300 g or greater (candle accessible area between 10 mm of base and up to 150 mm of base) for 3 minutes. The product is considered as up to the standards when the duration of the flame on the product is 3 minutes or less after removal of the candle.
* Flame Retardant Performance (UL94-V): UL94-V is injection-molded into a specimen of a defined dimension (125±5mm x 13.0±5mm x 13.0mm or less), which specimen is kept under conditions, such as (1) at 23±2°C and 50±5% R.H. for 4 hours; or (2) at 70±1°C for 168 hours, followed by 4-hour cooling down to the room temperature. The specimen is placed in a vertical position and lit with a burner to determine whether it can self-distinguish within a defined time. Based on the time taken for the specimen to self-distinguish, the UL94-V specimen is classified as V2, V1, or V0 according to the criteria given as follows.
   (1) V0: The specimen is placed and lit with a burner for 10 seconds. After removal of the burner, the duration of the flame on the specimen does not exceed 10 seconds. When the same test is conducted 10 times with one set of five samples, the total duration of combustion does not exceed 50 seconds. During combustion, there occurs no melt dripping and thus no ignition of the cotton ball placed 30 cm below the specimen.
   (2) V1: The test procedures are the same as described in the V0 ranking. After removal of the burner, the duration of the flame on the specimen does not exceed 30 seconds. The total duration of 10-time combustions is 250 seconds or less. During combustion, and there is no ignition on the cotton ball caused by a melt dripping.
   (3) V2: After removal of the burner, the duration of the flame on the specimen is 30 seconds or less. As in the case of V1, the total duration of 10-time combustions is 250 seconds or less. Unlike the case of V1, a melt dripping may occur to ignite the cotton ball.

**[Table 2]**

| **Specimen** | **1** | **2** | **3** | **4** | **5** |
|---|---|---|---|---|---|
| **Candle test** | **Passed** | **Passed** | **Passed** | **Passed** | **Passed** |
| **UL94-V** | **V0** | **V0** | **V0** | **V0** | **V0** |

It is demonstrated that the amino group-containing phosphate ester flame retardant according to an embodiment of the present invention has both a phosphate group and an amine group and thus exhibits a good flame retarding effect with respect to its used amount.

## Claims

1. Use of an amino group-containing phosphate ester comprising both an amino group and a phosphate group, wherein the amino group-containing phosphate ester is selected from the group consisting of tris-(2-diethylamino-ethyl)phosphate, tris-(2-dimethylamino-ethyl)phosphate, tridimethylaminomethyl phosphate, tridiethylaminomethyl phosphate, bis-(2-dimethylamino-ethyl)methyl-phosphate, bis-(2-diethylamino-ethyl)methyl-phosphonate, di-diethylaminomethylmethyl-phosphate, triethylamino phosphate, di-ethylamino methylamino phosphate, dimethylamino ethylamino phosphate, diethylaminomethyl dimethyl phosphate, 2-diethylamino-ethyldimethyl phosphate, and 2-dimethylamino-ethyl-dimethyl phosphate as a flame retardant.

2. Use as claimed in claim 1, wherein the amino group-containing phosphate ester is substituted with a halogen.

3. Use as claimed in claim 2, wherein the halogen is fluorine, chlorine, bromine, or iodine.

4. Use as claimed in claim 2, wherein amino group-containing phosphate ester is selected from the group consisting of tris-[2-(bis-chloromethyl-amino)-ethyl] phosphate, tris-[2-(chloromethyl-ethyl-amino)-ethyl] phosphate, tris-[(bis-chloromethyl-amino)-methyl] phosphate and tris-[(chloromethyl-ethyl-amino)-methyl] phosphate.

5. A flame retardant resin composition comprising: 5 to 50 wt% of the amino group-containing phosphate ester flame retardant as claimed in claim 1; and 50 to 95 wt% of a resin.

6. The flame retardant resin composition as claimed in claim 5, wherein the resin is selected from the group consisting of acryl-based resin, urethane-based resin, and polycarbonate.

## Patentansprüche

1. Verwendung eines eine Aminogruppe enthaltenden Phosphatesters umfassend sowohl eine Aminogruppe als auch eine Phosphatgruppe, wobei der eine Aminogruppe enthaltende Phosphatester ausgewählt ist aus der Gruppe bestehend aus tris-(2-Diethylamino-ethyl)phosphat, tris-(2-Dimethylamino-ethyl)phosphat, Tridimethylaminomethylphosphat, Tridiethylaminomethylphosphat, bis-(2-Dimethylamino-ethyl)methylphosphat, bis-(2-Diethylaminoethyl)methylphosphonat, di-Diethylaminomethylmethylphosphat, Triethylaminophosphat, Diethylaminomethylaminophosphat, Dimethylaminoethylaminophosphat, Diethylaminomethyldimethylphosphat, 2-Diethylaminoethyldimethylphosphat und 2-Dimethylamino-ethyldimethylphosphat, als ein Flammschutzmittel.

2. Verwendung nach Anspruch 1, wobei der eine Aminogruppe enthaltende Phosphatester mit einem Halogen substituiert ist.

3. Verwendung nach Anspruch 2, wobei das Halogen Fluor, Chlor, Brom oder Iod ist.

4. Verwendung nach Anspruch 2, wobei der eine Aminogruppe enthaltende Phosphatester ausgewählt ist aus der Gruppe bestehend aus tris-[2-(bis-Chlormethyl-amino)-ethyl]phosphat, tris-[2-(Chlormethyl-ethyl-amino)-ethyl]phosphat, tris[(bis-Chlormethyl-amino)methyl]phosphat und tris-[(Chlormethyl-ethyl-amino)methyl]phosphat.

5. Flammschutzmittelharzzusammensetzung umfassend: 5 bis 50 Gewichtsprozent des eine Aminogruppe enthaltenden Phosphatesterflammschutzmittels nach Anspruch 1; und 50 bis 95 Gewichtsprozent eines Harzes.

6. Flammschutzmittelharzzusammensetzung nach Anspruch 5, wobei das Harz ausgewählt ist aus der Gruppe bestehend aus Harz auf Acrylbasis, Harz auf Urethanbasis und Polycarbonat.

## Revendications

1. Utilisation d'un ester de phosphate contenant un groupe amino comprenant à la fois un groupe amino et un groupe phosphate, dans lequel l'ester de phosphate contenant le groupe amino est sélectionné parmi le groupe comprenant : phosphate de tris-(2-diéthylamino-éthyle), phosphate de tris-(2-diméthylamino-éthyle), phosphate de tridiméthylaminométhyle, phosphate de tridiéthylaminométhyle, phosphate de bis-(2-diméthylamino-éthyl)méthyle, phosphonate de bis-(2-diéthylamino-éthyl)méthyle, phosphate de di-éthylaminométhylméthyle, phosphate de triéthylamine, phosphate de di-éthylamino méthylamine, phosphate de diméthylamino éthylamine, phosphate de diéthylaminométhyl diméthyle, phosphate de 2-diéthylamino-éthyldiméthyle, et phosphate de 2-diméthylamino-éthyl-diméthyle comme ignifugeant.

2. Utilisation selon la revendication 1, dans laquelle l'ester de phosphate contenant un groupe amino est substitué par un halogène.

3. Utilisation selon la revendication 2, dans laquelle le halogène est du fluor, du chlore, du brome ou de l'iode.

4. Utilisation selon la revendication 2, dans laquelle l'ester de phosphate contenant le groupe amino est sélectionné parmi le groupe comprenant phosphate de tris-[2-(bis-chlorométhyl-amino)-éthyle], phosphate de tris-[2-(chlorométhyl-éthyl-amino)-éthyle], phosphate de tris-[(bis-chlorométhyl-amino)-méthyle], et phosphate de tris-[(chlorométhyl-éthylamino)-méthyle].

5. Composition de résine ignifugeante comprenant : 5 à 50 % en poids de l'ignifugeant d'ester de phosphate contenant un groupe amino selon la revendication 1 ; et de 50 à 95 % en poids d'une résine.

6. Composition de résine ignifugeante selon la revendication 5, dans laquelle la résine est sélectionnée parmi le groupe comprenant résine à base d'acryle, résine à base d'uréthane et polycarbonate.
